**Europäisches Patentamt**

**European Patent Office**

**Office européen des brevets**

(19)

(11) Veröffentlichungsnummer: **0 218 552**
**B1**

(12) # EUROPÄISCHE PATENTSCHRIFT

(45) Veröffentlichungstag der Patentschrift:
**07.12.88**

(51) Int. Cl.⁴: **G 03 B 27/58**

(21) Anmeldenummer: **86810412.6**

(22) Anmeldetag: **15.09.86**

(54) **Vorrichtung zur Halterung von lichtempfindlichem Material bei dessen Belichtung.**

(30) Priorität: **20.09.85 GB 8523300**

(43) Veröffentlichungstag der Anmeldung:
**15.04.87 Patentblatt 87/16**

(45) Bekanntmachung des Hinweises auf die Patenterteilung:
**07.12.88 Patentblatt 88/49**

(84) Benannte Vertragsstaaten:
**BE CH DE FR GB IT LI**

(56) Entgegenhaltungen:
**CH-A- 457 140**
**DE-B- 1 012 520**
**DE-B- 1 244 554**
**GB-A- 1 173 473**
**US-A- 2 959 096**

(73) Patentinhaber: **CIBA-GEIGY AG, Klybeckstrasse 141, CH-4002 Basel (CH)**

(72) Erfinder: **Shawcross, Brian Edward, 14 Ravenoak Park Road, Cheadle Hulme (GB)**

## Beschreibung

Die Erfindung betrifft eine Vorrichtung zum Flachhaltern von lichtempfindlichem Material während der Belichtung.

Es ist wichtig, dass lichtempfindliches Material und insbesondere blattförmiges photographisches Filmmaterial, photographisches Papier und holographisches Material während der Belichtungszeit so flach wie möglich gehalten wird.

Diese Forderung, das lichtempfindliche Material flach zu haltern, ist beim Belichten von holographischem Material besonders wichtig. Eine weitere Bedingung beim Belichten holographischen Materials ist die, dass das Licht in der Lage sein muss, durch das Material hindurchzutreten ohne reflektiert zu werden, sei es an einer Grundschicht opaken, lichtempfindlichen Materials, oder an einer festen Unterlage, auf welche das lichtempfindliche Material aufgebracht und auf der es während der Belichtung flach befestigt wird. Die Befestigung von holographischem Material auf einer lichtdurchlässigen Glasplatte ist nicht zufriedenstellend, da die Oberfläche der Glasplatte dazu neigt, zu viel Licht bei der Belichtung zu reflektieren. In einer besonderen Form des holographischen Belichtens belichtet ein Bezugsstrahl des beleuchtenden Lichtes das holographische Material von dessen einer Seite und der Objektstrahl des beleuchtenden Lichtes von der anderen Seite.

Verschiedene Vorrichtungen sind bereits zur Flach-Halterung von photographischem Material während des Belichtens vorgeschlagen worden. So sind z.B. Negativhalter für Negativ-Filmstreifen in der DE-AS 1 012 520, in der GB-PS 1 173 473 und in der DE-AS 1 244 553/4 beschrieben. In der CH-PS 457 140 wird eine Filmhalterung beschrieben, bei der der Positivfilm mittels eines Trägers federnd gelagerter Leisten an jeder Ecke auf eine opake Unterlage gepresst wird, um ihn in einem Belichtungsrahmen flach zu halten. In der US-PS 2 959 096 wird ein photographischer Negativträger vom Rahmentyp beschrieben. Der Film wird durch ein Paar Greifzangen erfasst, und hierauf soll ein Vorwärtsbewegen von zwei Rahmenabschnitten den Film strecken, um ihn von Falten und dgl. zu befreien.

Es ist nun Aufgabe der vorliegenden Erfindung, eine Vorrichtung zu verwirklichen, in der lichtempfindliches Material während der Belichtung sehr flach gehaltert wird.

Dies geschieht nach der Erfindung durch eine Vorrichtung zur Halterung von lichtempfindlichem Material während der Belichtung, die die im Patentanspruch 1 aufgeführten Merkmale aufweist.

Bevorzugte Ausführungsformen der Vorrichtung nach der Erfindung weisen mindestens eines der in den abhängigen Ansprüchen 2-6 aufgeführten Merkmale auf.

Wird die Vorrichtung zur Belichtung von holographischem Material verwendet, so sollten beide Rahmen der Vorrichtung zwischen ihren Seitenwänden offen sein, und nicht nur einer dieser Rahmen.

Beim Betrieb wird ein Bogen lichtempfindlichen Materials flach auf einen der Rahmen gelegt, während die Vorrichtung sich in derjenigen Stellung befindet, bei der beide Rahmen voneinander getrennt sind. Die beiden Rahmen werden dann zusammengedrückt, wobei das lichtempfindliche Material zwischen den nachgiebigen Materialstreifen auf jedem der Rahmen eingeklemmt wird. Jeder Streifen wird an die Seitenwand angedrückt auf welcher er angebracht ist und hierdurch wird eine Verbreiterung des Streifens verursacht. Dies bewirkt, dass das zwischen den Rahmen gehalterte lichtempfindliche Material nach jeder Richtung hin seitlich gestreckt wird, wodurch es zwischen den beiden Rahmen sehr flach und sicher gehalten wird.

Das Merkmal des Unteranspruchs 5 stellt sicher, dass ein Blatt lichtempfindlichen Materials, das auf einem der Rahmen gehalten ist, beim Aufdrücken des zweiten Rahmens nicht in seiner Halterung beeinträchtigt wird.

Geeignete nachgiebige Materialien zur Herstellung von Trennbändern oder Streifen sind z.B. Gummi oder Neopren.

Eine bevorzugte Ausführung des Erfindungsgegenstandes ist in den Zeichnungen veranschaulicht, in welchen

Fig. 1 eine Ansicht in Perspektive der Vorrichtung nach der Erfindung in aufgeklappter Stellung, in der die beiden Rahmen getrennt sind;

Fig. 2 ebenfalls eine Ansicht in Perspektive der gleichen Ausführungsform, aber in geschlossener Stellung mit den beiden passend aufeinanderliegenden zusammengepressten Rahmen;

Fig. 3 eine schematische Ansicht im Querschnitt durch den unteren Rahmen in aufgeklappter Stellung, und

Fig. 4 eine schematische Ansicht im Querschnitt durch beide Rahmen in geschlossener Stellung mit einem darin gehalterten Blatt lichtempfindlichen Materials
darstellen.

In den Figuren der Zeichnungen haben alle Bezugsziffern die gleiche Bedeutung.

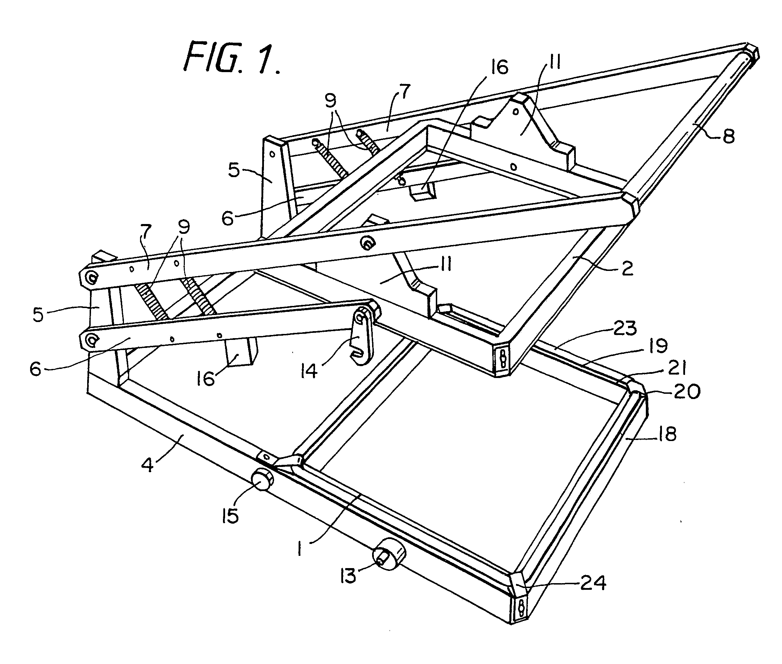

Daher umfasst die Vorrichtung in der in Figuren 1 bis 4 gezeigten Ausführungsform zwei von einem Rahmengestell getragene ebene Rahmen 1 und 2. Das Rahmengestell besteht aus einer Grundplatte 4, von deren einem Ende der untere Rahmen 1 getragen wird. Zwei Säulen oder Ständer 5, die an den vom Rahmen 1 wegliegenden Ecken der Grundplatte auf dieser aufrecht montiert sind, tragen, an ihnen jeweils schwenkbar befestigt, zwei untere Sparren oder Holme 6 und zwei obere Holme 7. An den freien, von ihren Schwenklagern auf den Ständern 5 abgewandten Enden sind die oberen Holme 7 durch einen Querholm miteinander verbunden, der einen Handgriff 8 bildet. Die Holmpaare 6 und 7 werden durch Zugfedern 9 in Richtung aufeinander zu belastet.

An den freien Enden der unteren Holme 6 ist, gegenüber diesen, schwenkbar der Rahmen 2 befestigt, der seinerseits mit den Holmen 7 über mit dem Rahmen 2 starr verbundene Verbindungsnasen 11 ebenfalls schwenkbar verbunden ist.

Die Grundplatte 4 umfasst auf jeder Seite unterhalb des Rahmens 1 zwei seitlich nach aussen herausragende Ansätze oder Zapfen 13. An ihren mit dem oberen Rahmen 2 verbundenen freien Enden tragen die unteren Holme 6 dazu schwenkbar je eine hakenförmige Verbindungslasche 14. Wird der Rahmen 2 auf den Rahmen 1 herabgedrückt, so können die beiden Rahmen 1 und 2 durch Einhaken der Verbindungslaschen 14 an den Zapfen 13 in ihrer Stellung aufeinander zusammengehalten werden.

Weiter trägt die Grundplatte 4 zwei Kunststoffscheiben 15 auf einander gegenüberliegenden Aussenseiten, am besten in deren mittlerem Bereich, wo die innere, den Ständern 5 zugewandte Querwand des Rahmens 1 sich über die Grundplatte 4 hinwegerstreckt.

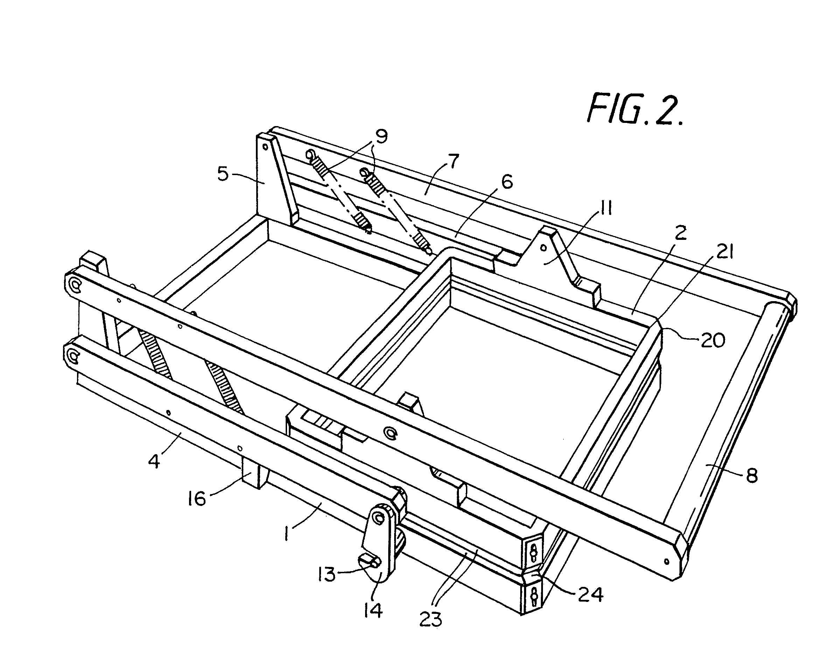

Zwei Anschlagglieder 16 sind an der der Grundplatte 4 zugekehrten Unterseite der unteren Holme 6 montiert und passen beim Aufeinanderdrücken der beiden Rahmen 1 und 2 eng auf diese Kunststoffscheiben 15. Dabei sind die Anschlagglieder 16 auf ihrer Unter- und Innenseite so gestaltet, dass sie glatt über die entsprechend gestalteten Kunststoffscheiben 15 aufgeschoben werden können. Die Anschlagglieder 16 und Kunststoffscheiben 15 stellen so einen genauen Passsitz des Rahmens 2 auf dem Rahmen 1 sicher, wenn der erstere auf den letzteren in die in Fig. 2 gezeigte Verschliessstellung gedrückt wird.

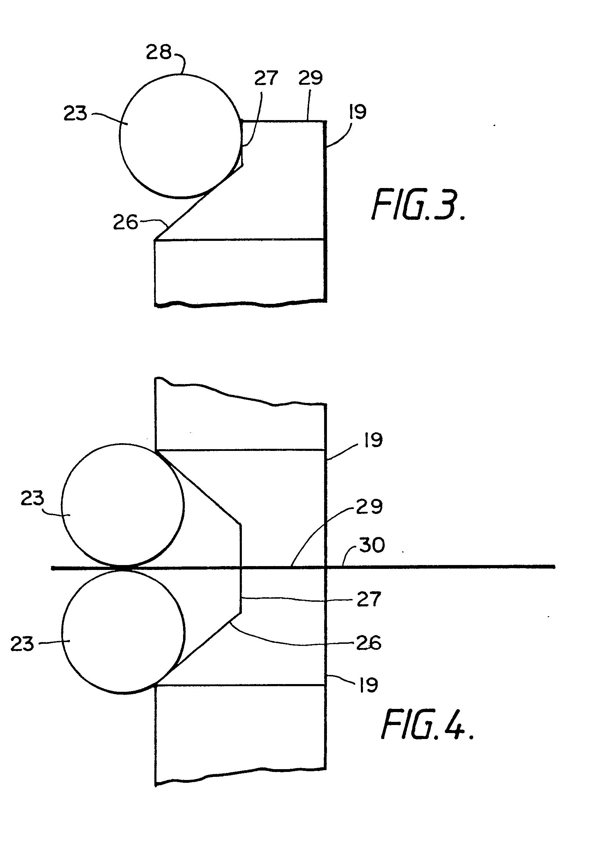

Beide Rahmen 1 und 2 besitzen auf ihren miteinander parallel verlaufenden, auf der dem anderen Rahmen zugekehrten oberen Endfläche der den Rahmen umgebenden Rahmenwandung 18 jeweils eine vom inneren Rahmenfeld weg mit einer umlaufenden nach aussen weisenden Abschrägung 26 (Figuren 3 und 4) versehene, nach oben herausragende Umfangsleiste 19, wobei beide Leisten 19 das eigentliche Belichtungsfeld umgrenzen.

Diese über die jeweilige Rahmenwandung erhabenen Umfangsleisten 19 besitzen abgerundete Aussenecken 20, aber innen rechtwinklige innere Ecken 21, so dass das Belichtungsfeld in beiden Rahmen 1 und 2 rechteckig ist.

Auf jede der umlaufenden abgeschrägten Aussenflächen 26 der Umfangsleisten 19 ist jeweils ein umlaufender, vorzugsweise in sich geschlossener Streifen oder ein Band 23, von vorzugsweise kreisförmigem Querschnitt und aus elastisch nachgiebigem Material, aufgesetzt (Fig. 3) und wird in seiner Stellung auf dieser Schrägfläche 26 durch an den abgerundeten Rahmenecken 20 angebrachte Tuchstreifen oder dergleichen Bindungen 24 festgehalten (Fig. 1). Nach einwärts stützen sich die Streifen oder Bänder 23 gegen Hineinrutschen oder Hineinquetschen eines Teilbereiches derselben zwischen die Rahmen 1 und 2 an einer vertikalen Aussenwandzone 27 der Umfangsleiste 19 ab. Wie in Fig. 3 gezeigt, ragt der Streifen oder das Band 23 von kreisrundem Querschnitt bei geöffnetem Rahmen mit seinem oberen Bereich 28 beim Rahmen 1 bzw. mit seinem unteren Bereich 28 beim Rahmen 2 über den oberen bzw. unteren Stirnrand 29 der betreffenden Umfangsleiste 19 hinaus.

In Fig. 4 ist nun die Stellung der umlaufenden Streifen oder Bänder 23 bei zwischen ihnen eingelegtem Bogen 30 aus lichtempfindlichem Material bei geschlossenen Rahmen 1 und 2 gezeigt. Dabei werden beim Zusammendrücken der beiden Rahmen die beiden jeweiligen Bänder 23 auf den Abschrägungen 26 nach aussen und im Rahmen 1 etwas abwärts und im Rahmen 2 etwas aufwärts verschoben und verformt, d.h. infolge der geringfügigen Verlängerung etwas gestreckt und mit ihren überstehenden Bereichen 28 von unten (Rahmen 1) bzw. oben (Rahmen 2) gegen den Bogen 30 gedrückt.

Beim Betrieb wird daher bei der in Fig. 1 gezeigten geöffneten Stellung der Rahmen zunächst der Bogen 30 auf den oberen Bereich 28 des umlaufenden Bandes 23 (Zustand von Fig. 3) am unteren Rahmen 1 aufgelegt. Dann wird der Handgriff 8 nach unten gezogen und hierdurch der Rahmen 2 entgegen der Kraft der Federn 9 auf den Rahmen 1 aufgesetzt, wobei die Federn 9 das Aufsetzen dämpfen. Gleichzeitig gleiten die Anschlagglieder 16 über die Kunststoffscheiben 15 und justieren die beiden Rahmen, so dass sie genau aufeinander zu liegen kommen. Ist der obere Rahmen 2 völlig auf den unteren Rahmen 1 herabgedrückt, so werden die Hakenlaschen 14 an den Zapfen 13 eingehakt und sichern so die beiden Rahmen 1 und 2 gegen ein unbeabsichtigtes Wiederöffnen.

Das Aufeinanderdrücken der beiden Rahmen 1 und 2 und das das Andrücken noch verstärkende Einhaken der Verbindungsmittel 13 und 14 bewirkt die bereits beschriebene Verschiebung und Streckung der auf ihren Aussenschrägflächen 26 nach aussen und aufwärts bzw. abwärts gedrückten Bänder 23, die dabei auch den zwischen ihnen erfassten Bogen 30 etwas in allen Richtungen strecken und so flach wie möglich einspannen. Dabei klemmen die Bänder 23 den Bogen 30 infolge ihrer Tendenz, sich wieder zu verkürzen, durch den hierdurch verstärkten Druck der Aussenbereiche 28 der Bänder auf die Bogenfläche den Bogen 30 fest zwischen den Rahmen 1 und 2. Der Bogen bietet sich daher für die folgende Belichtung höchst flach gestreckt und sicher gehalten an.

Nach Beschicken mit dem noch unbelichteten Bogen 30 in der oben beschriebenen Weise kann die Vorrichtung in ein Belichtungsgerät eingeführt werden, in welchem der Bogen 30 belichtet wird.

Andererseits kann die gesamte Vorrichtung auch bereits in ein Belichtungsgerät eingebaut sein und der Bogen 30 aus unbelichtetem lichtempfindlichem Material kann so an Ort und Stelle eingelegt, gestreckt und gehaltert und schliesslich belichtet werden.

Die in der Beschreibung verwendeten Ausdrücke «oberer», «unterer» und ähnliche beziehen sich stets auf die Lage der betreffenden Teile, wie sie in den Zeichnungen dargestellt ist. Natürlich können die Teile in der Praxis auch noch in anderer Weise, z.B. in einem Winkel zur in den Zeichnungen dargestellten Lage, angeordnet sein.

**Patentansprüche**

1. Vorrichtung zur Halterung von lichtempfindlichem Material, insbesondere in Blattform, bei dessen Belichtung durch Einspannen zwischen zwei Halteorganen,

— wobei zwei vorzugsweise ebene, und wenigstens annähernd gleich grosse Rahmen (1, 2) vorhanden sind, von denen mindestens der eine offen ist und jeder der beiden eine Umfangswandung (18) bestehend aus zwei Paar miteinander paralleler Wände und vorzugsweise abgerundeten Aussenecken (20) aufweist;

— wobei jeder Rahmen (1, 2) an seinem dem anderen Rahmen zugekehrten Randbereich (19) eine vom Ende (29) desselben weg nach aussen geneigte Schrägfläche (26) trägt;

— wobei je ein Band (23) von rundem Querschnitt und aus elastisch nachgiebigem Material auf der genannten Schrägfläche (26) jedes der Rahmen (1, 2) umlaufend so angebracht ist, dass bei im Abstand voneinander in Offenstellung befindlichen Rahmen (1, 2) das Band an einer umlaufenden Aussenwandzone (27) anliegt, und über das dem anderen Rahmen zugekehrte Ende (29) des Randbereichs (19) hinausragt;

— wobei beim Aneinanderdrücken der beiden Rahmen (1, 2) in die Schliessstellung die beiden Bänder (23) so auf ein dazwischengelegtes Blatt (30) lichtempfindlichen Materials gedrückt werden, dass sie auf den Schrägflächen (26) von der Aussenwandzone (27) weg unter eigener Dehnung und Flachstreckung des eingelegten Blattes (30) verschoben werden, und

— wobei Mittel (13, 14) zum zusammendrückenden Festhalten der beiden Rahmen (1, 2) in der Schliessstellung vorgesehen sind.

2. Vorrichtung nach Anspruch 1, dadurch gekennzeichnet, dass zwischen den beiden Rahmen (1, 2) Mittel (9, 11) vorgesehen sind, welche die beiden Rahmen in die Offenstellung belasten.

3. Vorrichtung nach Anspruch 2, dadurch gekennzeichnet, dass die beiden Rahmen (1, 2) in der Offenstellung parallel zueinanderliegen.

4. Vorrichtung nach einem der Ansprüche 1 bis 3, dadurch gekennzeichnet, dass jedes der Bänder (23) einen kreisrunden Querschnitt aufweist.

5. Vorrichtung nach einem der Ansprüche 1 bis 3, dadurch gekennzeichnet, dass jedes der Bänder an den Aussenecken (20) jedes Rahmens durch vorzugsweise lockere Bindungen (24) aus weichem Material gegen völliges Abrutschen von der sie tragenden Schrägfläche (26) gesichert ist.

6. Vorrichtung nach einem der Ansprüche 1 bis 3, dadurch gekennzeichnet, dass Führungsmittel (15, 16) an den Rahmen (1, 2) vorgesehen sind, durch die die beiden Rahmen in der Schliessstellung genau aufeinanderpassend gehalten werden.

## Claims

1. A device for holding photosensitive material, particularly in sheet form, during the exposure thereof by clamping between two holding members, two preferably planar frames (1, 2) of at least approximately equal size being present, at least one of which is open and both of which have a peripheral wall (18) consisting of two pairs of walls parallel to each other and preferably rounded outer corners (20);

— each of the frames (1, 2) having on its edge region (19) facing the other frame a bevelled surface (26) inclined outwards away from the end (29) of the frame;

— in each case, one band (23) of rounded cross-section and of elastic flexible material being applied around said bevelled surface (26) of each of the frames (1, 2) in such a way that with the frames (1, 2) located at a distance from each other in the open position the band rests on a surrounding outer wall zone (27) and protrudes across the end (29) of the edge area (19) facing the other frame;

— on pressing the two frames (1, 2) together into the closed position, the two bands (23) being pressed onto an interposed sheet (30) of photosensitive material in such a way that they are displaced away on the bevelled surfaces (26) of the outer wall zone (27) by their own expansion and stretching flat the inserted sheet (30), and

— means (13, 14) being provided for the compressive securing of both frames (1, 2) in the closing position.

2. A device according to Claim 1, characterised in that means (9, 11) are provided between the two frames (1, 2) which stress the two frames in the open position.

3. A device according to Claim 2, characterised in that the two frames (1, 2) lie parallel to each other in the open position.

4. A device according to one of Claims 1 to 3, characterised in that each of the band (23) has a circular cross-section.

5. A device according to one of Claims 1, to 3, characterised in that each band is secured against completely slipping off the bevelled surface (26) supporting them by preferably loose binding means (24) of soft material on the outer corners (20) of each frame.

6. A device according to one of Claims 1 to 3, characterised in that guide means (15, 16) are provided on the frames (1, 2) by means of which the two frames are held fitting exactly on each other in the closed position.

## Revendications

1. Dispositif pour tenir pendant son exposition un matériel photosensible, en particulier en forme de feuille, par serrage entre deux organes de retenue

— deux cadres (1, 2), de préférence plans et au moins approximativement de la même grandeur et dont au moins l'un est ouvert, étant prévus, chacun des deux comportant une enceinte périphérique (18) constituée de deux paires de parois mutuellement parallèles et par des coins externes (20) de préférence arrondis;

— chacun des cadres (1, 2) portant sur sa zone marginale (19), tournée du côté de l'autre cadre, une surface oblique (26) inclinée vers l'extérieur à partir de l'extrémité (29) de celle-ci;

— un ruban 23, de section transversale ronde et en matériau élastiquement flexible, étant respectivement disposé tout au long de la surface oblique (26) précitée de chacun des cadres (1, 2) de manière que, les cadres (1, 2) se trouvant à distance l'un de l'autre en position ouverte, le ruban vienne s'appliquer sur une zone de paroi périphérique externe (27) et fasse saillie en dehors de l'extrémité (29), tournée vers l'autre cadre, de la zone marginale (19);

— les deux rubans, lors de la compression des deux cadres (1, 2) l'un contre l'autre en position de fermeture étant appuyés sur une feuille (30) de matériel photosensible insérée entre eux, et ce, de façon qu'ils soient repoussés sur les surfaces obliques (26) à partir de la zone de paroi externe (27) tout en étirant et en mettant à plat la feuille insérée (30), et

— des moyens (13, 14) étatn prévus pour maintenir les deux cadres (1, 2) serrés en position de fermeture.

2. Dispositif selon la revendication 1, caractérisé par le fait qu'entre les deux cadres (1, 2), il est prévu des moyens (9, 11) qui sollicitent les deux cadres à la position d'ouverture.

3. Dispositif selon la revendication 2, caractérisé par le fait que les deux cadres (1, 2) sont disposés parallèlement l'un à l'autre à la position d'ouverture.

4. Dispositif selon l'une des revendications 1 à 3, caractérisé par le fait que chacun des rubans (23) a une section transversale circulaire.

5. Dispositif selon l'une des revendications 1 à 3, caractérisé par le fait que chacun des rubans au niveau des coins externes (20) de chaque cadre est assuré contre toute possibilité de chute par glissement sur la surface oblique (26) les portant par des liaisons (24), de préférence lâches, en matériau souple.

6. Dispositif selon l'une des revendications 1 à 3, caractérisé par le fait que sur les cadres (1, 2), il est prévu des moyens de guidage (15, 16) par lesquels les deux cadres sont maintenus appliquées l'un contre l'autre avec une précision en position de fermeture.

FIG. 1.

FIG.2.

EP 0 218 552 B1

FIG.3.

FIG.4.